# EUROPÄISCHE PATENTSCHRIFT

(11) **EP 2 569 058 B1**
(45) Veröffentlichungstag und Bekanntmachung des Hinweises auf die Patenterteilung: **11.02.2015**
(21) Anmeldenummer: 11718093.5
(22) Anmeldetag: 06.05.2011
(51) Int. Cl.: A62C 35/68, G05D 16/10, F16K 31/383, F16K 1/30, F16K 17/38

(54) **VENTIL**
VALVE
SOUPAPE

(30) Priorität: 11.05.2010 DE 102010028858
(43) Veröffentlichungstag der Anmeldung: 20.03.2013
(73) Patentinhaber: FiWaRec Valves & Regulators GmbH & Co. KG, 54343 Föhren (DE)
(72) Erfinder: BERMES, Karl, 54666 Irrel (DE); FELTEN, Frank, 54313 Zemmer (DE)
(74) Vertreter: Rau, Schneck & Hübner Patentanwälte Rechtsanwälte PartGmbB
(86) Internationale Anmeldenummer: PCT/EP2011/057259
(87) Internationale Veröffentlichungsnummer: WO 2011/141356

(56) Entgegenhaltungen:
- EP-A1- 0 666 087
- EP-A1- 1 591 144
- WO-A1-2007/073390
- GB-A- 2 439 338

## Beschreibung

Die Erfindung betrifft ein Ventil für einen Druckbehälter einer automatischen Brandlöschanlage.

Derartige Brandlöschanlagen sind durch offenkundige Vorbenutzung und aus der gattungsgemäßen EP 1 591 144 A1, der WO 2007/073390 A1, der GB 2 439 338 A und aus der EP 0 666 087 A1 seit längerem bekannt. Sie umfassen einen Druckbehälter mit Brandlöschmedium wie beispielsweise N₂, wobei das Brandlöschmedium unter erhöhtem Druck von bis zu mehreren 100 bar in dem Druckbehälter bevorratet ist. Der Druckbehälter ist durch ein Ventil verschlossen, an das eine Sensorleitung zur automatischen Erfassung eines Brandfalls für eine Auslösung eines Löschvorgangs und eine Löschleitung zur Abgabe des Brandlöschmediums während des Löschvorgangs angeschlossen sind. Zur Überwachung eines in der Brandlöschanlage herrschenden Systemdrucks und einer in Abhängigkeit von dem Systemdruck auszulösenden Signalgebung kann ein Druckschalter eingesetzt werden. Der Druckschalter kann direkt an das Ventil angeschlossen sein.

Der Erfindung liegt die Aufgabe zugrunde, ein Ventil für einen Druckbehälter einer automatischen Brandlöschanlage bereitzustellen, das eine für eine Anwendung verbesserte Funktionalität aufweist und gleichzeitig einfach und kompakt aufgebaut ist.

Die Aufgabe wird durch die Merkmale des Anspruchs 1 gelöst. Der Kern der Erfindung besteht darin, in einem Ventil-Gehäuse eine DruckregelEinheit zur Regelung eines Niederdrucks in einer Niederdruck-Kammer des Ventil-Gehäuses gegenüber einem Behälterdruck des Druckbehälters anzuordnen. Dazu steht die Druckregel-Einheit mit dem Druckbehälter über eine Ventil-Eingangs-Öffnung und mit der Niederdruck-Kammer in Druckverbindung. Die Niederdruck-Kammer dient zum Anschließen einer Auslöse-Vorrichtung, insbesondere einer Sensorleitung. Dadurch, dass durch die Druckregel-Einheit in der Niederdruck-Kammer ein gegenüber dem Behälterdruck geregelter, insbesondere reduzierter, Niederdruck vorliegt, ist die Druckbeanspruchung des Ventils und der Sensorleitung reduziert. Weiterhin sind das Sicherheitsrisiko und die Gefahr von Beschädigungen der mit dem geringeren Niederdruck beaufschlagten Komponenten verringert. Weiterhin weist das Ventil-Gehäuse eine Ventil-Ausgangs-Öffnung zum Anschließen einer Löschleitung auf, wobei die VentilAusgangs-Öffnung und die Ventil-Eingangs-Öffnung über einen Ventilsitz miteinander verbunden sind. Ein Schließ-Kolben weist eine Ventilsitz-Dichtung auf und ist zwischen einer Schließ-Kolben-Schließstellung einer Schließ-Kolben-Offenstellung verlagerbar. In der Schließ-Kolben-Schließstellung ist der Schließ-Kolben mit der Ventilsitz-Dichtung auf dem Ventilsitz fluiddicht angeordnet, sodass die Ventil-Ausgangs-Öffnung gegenüber der Ventil-Eingangs-Öffnung abgedichtet ist. In der Schließ-Kolben-Offenstellung ist der Schließ-Kolben beabstandet zu dem Ventilsitz angeordnet, sodass die Ventil-Ausgangs-Öffnung und die Ventil-EingangsÖffnung in Druckverbindung stehen. Darüber hinaus weist das Ventil-Gehäuse eine mit der Niederdruck-Kammer verbindbare Hochdruck-Kammer auf, wobei eine Verbindung der Kammern in Abhängigkeit einer Stellung eines in dem Ventil-Gehäuse verlagerbaren Steuer-Kolbens erfolgt. In einer Steuer-Kolben-Schließstellung des Steuer-Kolbens ist ein Druck-Kanal zwischen der Hochdruck-Kammer und der Niederdruck-Kammer fluiddicht abgedichtet und in einer Steuer-Kolben-Offenstellung ist der Druck-Kanal durch den Steuer-Kolben freigegeben, sodass die Hochdruck-Kammer und die Niederdruck-Kammer in Druckverbindung stehen. Der Schließ-Kolben, der vorzugsweise über eine Druckausgleichs-Bohrung die Ventil-Eingangs-Öffnung mit der Hochdruck-Kammer verbindet, ermöglicht eine direkte Befüllung des Druckbehälters über das Ventil über die Ventil-Ausgangs-Öffnung, an die eine entsprechende FüllLeitung anzuschließen ist. Während des Füllvorgangs wird der Schließ-Kolben aufgrund eines dynamischen Fülldrucks von der Schließ-Kolben-Schließstellung in die Schließ-Kolben-Offenstellung verlagert, sodass die Ventil-Ausgangs-Öffnung und die Ventil-Eingangs-Öffnung miteinander in Druckverbindung stehen. Gleichzeitig verschließt der Schließ-Kolben in der Schließ-Kolben-Schließstellung während des Betriebs des Ventils die Ventil-Ausgangs-Öffnung und verhindert damit, dass im Betriebszustand des Ventils im nichtausgelösten Zustand eine Abgabe von Brandlöschmedium über die Ventil-Ausgangs-Öffnung erfolgt. Mittels des Steuer-Kolbens kann eine Druckverbindung zwischen der Niederdruck-Kammer und der Hochdruck-Kammer unterbunden werden, sodass die beiden Kammern druckmäßig voneinander getrennt sind. Dadurch ist die Beaufschlagung der Niederdruck-Kammer mit dem gegenüber dem Behälterdruck reduzierten Niederdruck ermöglicht. Die Trennung der beiden Kammern voneinander erfolgt durch den Steuer-Kolben in Abhängigkeit eines Drucks in der Niederdruck-Kammer.

Weitere vorteilhafte Ausgestaltungen der Erfindung ergeben sich aus den Unteransprüchen.

Zusätzliche Merkmale und Einzelheiten der Erfindung ergeben sich aus der nachfolgenden Beschreibung eines Ausführungsbeispiels anhand der Zeichnung. Es zeigen:
- Figur 1: eine schematische Darstellung einer automatischen Brandlöschanlage mit einem auf einem Druckbehälter aufgesetzten Ventil,
- Figur 2: eine Seitenansicht des erfindungsgemäßen Ventils in einem drucklosen Zustand,
- Figur 3: eine Figur 2 entsprechende, bezüglich einer Längsachse des Ventils um 90° gedrehte Seitenansicht des Ventils,
- Figur 4: einen Längsschnitt gemäß der Schnittlinie IV-IV in Figur 2,
- Figur 5: einen Längsschnitt gemäß der Schnittlinie V-V in Figur 3,
- Figur 6: eine Figur 4 entsprechende Seitenansicht eines Druckregel-Kolbens,
- Figur 7: einen Querschnitt gemäß der Schnittlinie VI-VI in Figur 4,
- Figur 8: ein Figur 4 entsprechender Längsschnitt des Ventils während eines Füllvorgangs,
- Figur 9: ein Figur 5 entsprechender Längsschnitt des Ventils während des Füllvorgangs,
- Figur 10: einen Figur 7 entsprechenden Querschnitt des Ventils während des Füllvorgangs,
- Figur 11: ein Figur 8 entsprechender Längsschnitt nach Beendigung des Füllvorgangs,
- Figur 12: einen Figur 9 entsprechenden Längsschnitt nach Beendigung des Füllvorgangs,
- Figur 13: einen Figur 12 entsprechenden Längsschnitt mit einer an das Ventil angeschlossenen Sensorleitung,
- Figur 14: einen Figur 10 entsprechenden Querschnitt des Ventils während einer Befüllung der Sensorleitung,
- Figur 15: ein Figur 11 entsprechender Längsschnitt des Ventils während eines Löschvorgangs und
- Figur 16: ein Figur 13 entsprechender Längsschnitt des Ventils während des Löschvorgangs.

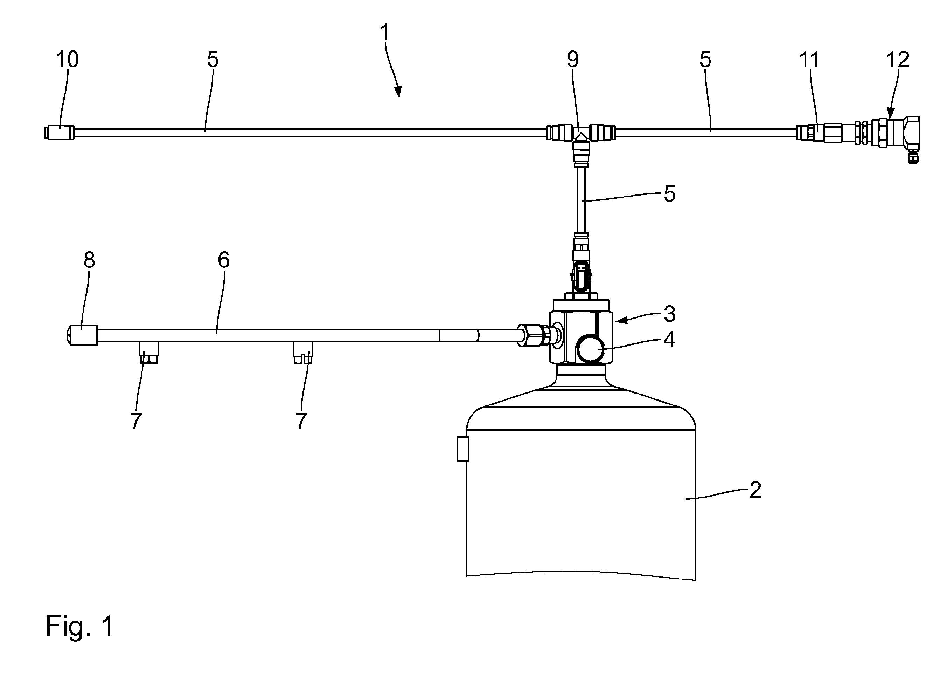

Eine in Figur 1 schematisch dargestellte automatische Brandlöschanlage 1 umfasst einen Druckbehälter 2 zur Bevorratung eines Brandlöschmediums, insbesondere Stickstoff (N₂). Auf den Druckbehälter 2 ist ein Ventil 3 aufgesetzt, insbesondere aufgeschraubt, an dem ein Druckmessgerät 4 angebracht ist. Über das Ventil 3 an den Druckbehälter 2 angeschlossen sind eine Auslöse-Vorrichtung 5 in Form einer Sensorleitung zur automatischen Erfassung eines Brandfalls für eine Auslösung eines Löschvorgangs sowie eine Löschleitung 6 zur Abgabe des Brandlöschmediums während des Löschvorgangs. Die Löschleitung 6 weist mehrere Löschdüsen 7 zur Abgabe des Brandlöschmediums auf. An einem mit dem Ventil 3 verbundenen, gegenüberliegenden Ende der Löschleitung 6 ist ein Schließstopfen 8 zum fluiddichten Verschließen der Löschleitung 6 vorgesehen. Es ist auch möglich, anstelle des Schließstopfens 8 eine weitere Löschdüse 7 zu verwenden.

Die Sensorleitung 5 ist im Bereich eines oder mehrer zu schützender Objekte verlegt und von dem Druckbehälter 2 über das Ventil 3 mit einem Systemdruck p_{sys} beaufschlagt, der insbesondere gegenüber einem Behälterdruck p_{B}, unter welchem das Brandlöschmedium in dem Druckbehälter 2 bevorratet ist, reduziert ist. Der Systemdruck p_{sys} beträgt typischerweise 15 bis 20 bar, wobei der Behälterdruck p_{B} in dem Druckbehälter beispielsweise bis zu 360 bar betragen kann. Ein Füllvorgang des Druckbehälters 2 und der Sensorleitung 5 wird im Einzelnen noch erläutert. Die Sensorleitung 5 ist als Kunststoff-Schlauch ausgeführt und mittels eines T-Verbindungsstücks 9 verzweigt. In Abhängigkeit der auszulegenden Sensorleitungs-Konfiguration können verschiedene Verbindungsstücke verwendet werden, die für Schlauchverbindung an sich bekannt sind, um beliebige Längen und/oder beliebige Konfigurationen der Sensorleitung 5 zu erzeugen. Der Kunststoff-Schlauch kann flexibel im Gefahrenbereich der zu schützenden Objekte verlegt werden und bedarf als integrales Bauteil der Brandlöschanlage 1 keine externe Energieversorgung zur Branderkennung und Aktivierung von Löschsystemen. Die notwendige Druckversorgung erfolgt über den Druckbehälter 2 und das Ventil 3 mit dem Systemdruck p_{sys}. Im Falle eines Brandes platzt der Sensorschlauch an seiner wärmsten Stelle auf. Der dadurch entstehende Druckabfall führt zur Aktivierung des Löschsystems. Durch die Ausgestaltung der Auslöse-Vorrichtung 5 als Sensorleitung wird eine linienförmige Überwachung und Detektion eines Brandherdes in der Nähe von zu schützenden Objekten ermöglicht. Weiterhin ist eine flexible Verlegung im Gefahrenbereich von zu schützenden Objekten gewährleistet. Darüber hinaus ist höchste Sicherheit durch einfachen Aufbau und einfaches Funktionsprinzip sowie geringe Störanfälligkeit der Auslöse-Vorrichtung 5 gegeben. Die Sensorleitung funktioniert autark ohne externe Energieversorgung. Ein Ende der Sensorleitung 5 ist durch ein Verschluss-Element 10 fluiddicht abgeschlossen. Ebenfalls an die Sensorleitung 5 über ein Leitungsend-Anschlusselement 11 angeschlossen, ist ein Druckschalter 12 zur Auslösung eines SchaltSignals in Abhängigkeit des Systemdrucks p_{sys} in der Brandlöschanlage 1. Darüber hinaus ist es auch möglich, den Druckschalter 12 direkt an das Ventil 3 des Druckbehälters 2 anzuschließen oder in das Ventil 2 zu integrieren. Bei einer Integration des Druckschalters 12 in das Ventil 2 wird die Anzahl von Schnittstellen und Einzelteilen der Gesamtanordnung reduziert, so dass insgesamt eine verbesserte Dichtheit des Systems resultiert.

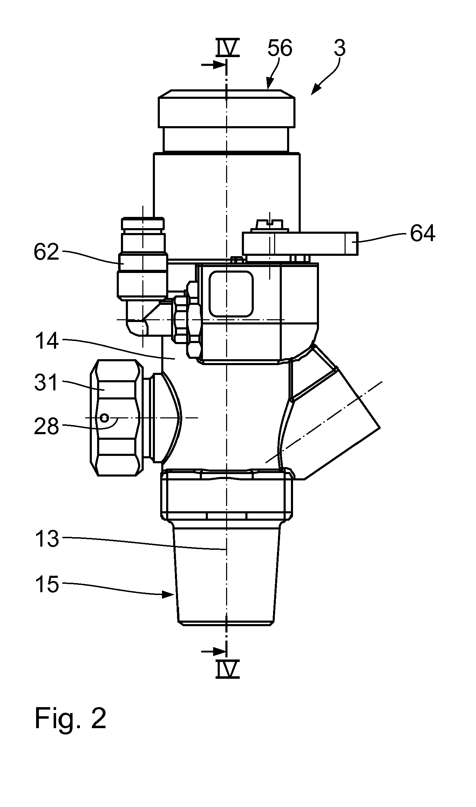

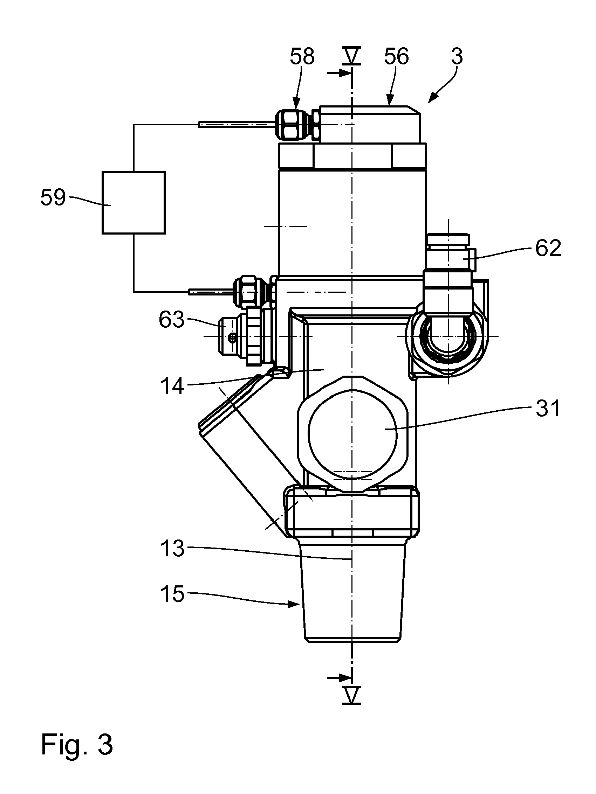

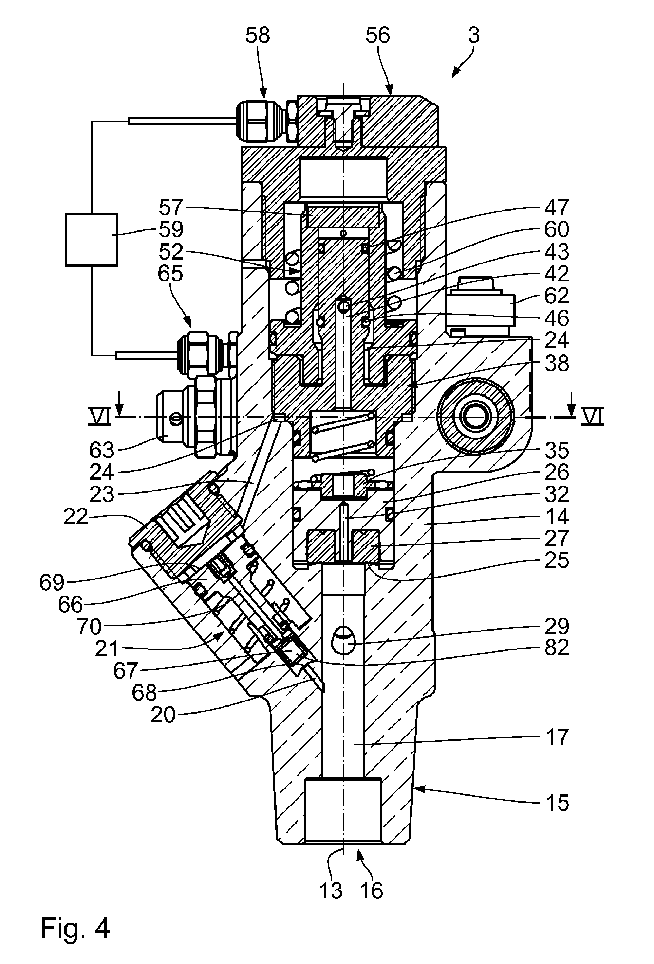

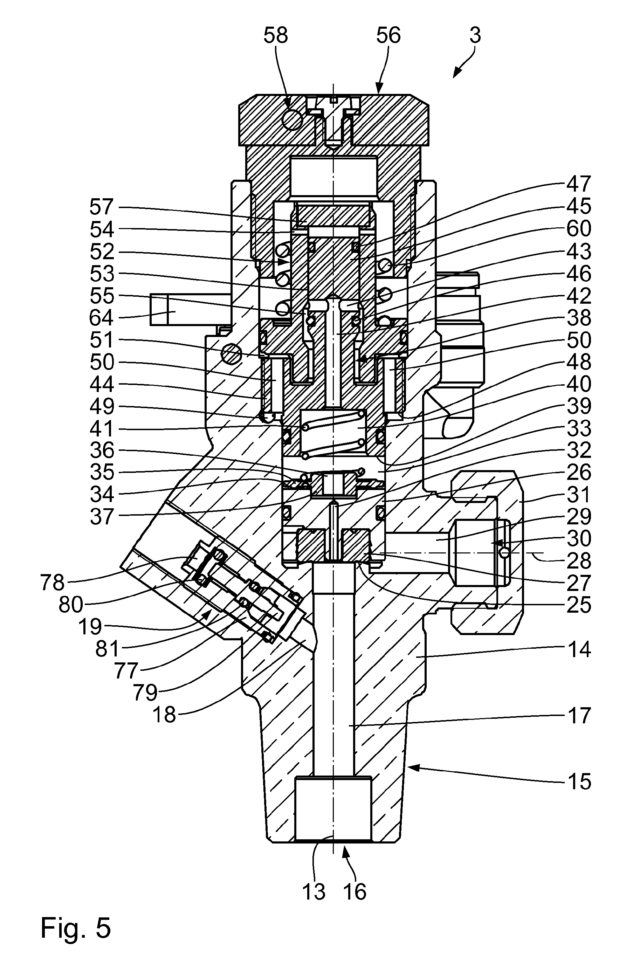

Im Folgenden wird anhand der Figuren 2 bis 7 das Ventil 3 in einem drucklosen Zustand näher beschrieben. Das Ventil 3 umfasst ein eine Längsachse 13 aufweisendes Ventil-Gehäuse 14. Das Ventil 3 ist im Wesentlichen hohlzylindrisch aufgebaut und weist an einem in den Figuren 4 und 5 unten dargestellten Ende einen Anschlussstutzen 15 zum Anschließen des Ventils 3 an den Druckbehälter 2 auf. Gemäß dem gezeigten Ausführungsbeispiel ist der Anschlussstutzen 15 entlang der Längsachse 13 konisch verlaufend ausgebildet. Es ist auch möglich, dass der Anschlussstutzen 15 zylindrisch gestaltet ist und ein Einschraubgewinde zum Einschrauben in den Druckbehälter 2 aufweist. An einem unteren, dem Druckbehälter 2 zugewandten Ende des Anschlussstutzens 15 hat das Ventil 3 eine Ventil-Eingangs-Öffnung 16, über die das in dem Druckbehälter 2 befindliche Brandlöschmedium durch den Ventil-Eingangs-Kanal 17 in das Ventil 3 strömen kann. Direkt an den Ventil-Eingangs-Kanal 17 ist ein Druckmess-Kanal 18 angeschlossen, in dem ein Anschluss 19 für das Druckmessgerät 4 vorgesehen ist.

An den beispielsweise in Figur 5 dargestellten Anschluss 19 kann beispielsweise ein Druckmessgerät 4 angeschlossen werden, auch wenn der Druckbehälter 2 bereits unter Betriebsdruck steht oder beispielsweise gerade gefüllt wird. Dies wird dadurch erreicht, dass der Anschluss 19 eine Ventileinsatz-Hülse 77 aufweist, die in den Druckmess-Kanal 18 eingeschraubt ist. In der Ventileinsatz-Hülse 77 ist ein Ventileinsatz-Durchgangskanal 78 ausgebildet, in dem ein Schließ-Stößel 79 zum Schließen und Öffnen des Ventileinsatz-Durchgangskanals 78 vorgesehen ist. Ferner ist ein äußeres, dem Druckmessgerät 4 abgewandtes Dichtungs-Element 80, insbesondere ein O-Ring, zur gasdichten Verbindung des Druckmessgeräts 4 mit der Ventileinsatz-Hülse 77 vorgesehen. Dadurch ist es möglich, dass eine Montage des Druckmessgeräts 4 in die Ventileinsatz-Hülse 77 des Anschlusses 19 auch bei erhöhtem Behälterdruck p_{B} des Druckbehälters 2 möglich ist, ohne dass das Brandlöschmedium aus dem Druckbehälter 2 unkontrolliert entweicht. Dadurch wird weiter vermieden, dass bei der Montage und Demontage des Druckmessgeräts 4 Beschädigungen an dem Druckmessgerät 4 und/oder dem Ventil 3 auftreten. Insbesondere besteht keine Gefährdung für einen Bediener aufgrund einer mit hohem Druck ausgestoßenen Dichtung oder damit verbundenem Austritt des Brandlöschmediums sowie Geräuschentwicklung. Montage und Demontage des Druckmessgeräts 4 können beispielsweise erforderlich sein, wenn anstelle des Druckmessgeräts 4 ein anders Anschluss-Element auf den Anschluss 19 montiert werden soll. Eine Demontage des Druckmessgeräts 4 ist aber beispielsweise auch bei einem Transport des Druckbehälters 2 sinnvoll, um Beschädigungen des Druckmessgeräts 4 während des Transports oder bei Be- und Entladevorgängen von Transportmitteln zu vermeiden.

Weiter ist ein inneres Dichtungs-Element 81 vorgesehen, über das der Druckmess-Kanal 18 in der in Figur 5 gezeigten Anordnung des Anschlusses 19 gasdicht gegenüber der Umgebung abgedichtet ist. In der in Figur 5 gezeigten Anordnung befindet sich der Schließ-Stößel 79 in der Ventileinsatz-Hülse 77 in einer Schließ-Stellung. Bei einem Anschließen des Druckmessgeräts 4 an den Anschluss 19 wird zunächst der Ventileinsatz-Durchgangskanal 78 durch einen nicht gezeigten Anschluss-Stutzen des Druckmessgeräts 4 und das äußere Dichtungs-Element 80 gasdicht abgedichtet. Erst anschließend erfolgt die Betätigung des Schließ-Stößels 79 durch den Anschluss-Stutzen des Druckmessgeräts 4 derart, dass der Ventileinsatz-Durchgangskanal 78 durch Verlagerung des Schließ-Stößels 79 in Richtung des Ventileingangs-Kanals 17 geöffnet wird und Brandlöschmedium mit Behälterdruck p_{B} zu dem Druckmessgerät strömt.

Ebenfalls direkt an den Ventil-Eingangs-Kanal 17 angeschlossen ist ein Druckregel-Kanal 20 zur Druckverbindung einer Druckregel-Einheit 21 mit dem Ventil-Eingangs-Kanal 17 und damit mit dem Druckbehälter 2. Wie in Figur 4 gezeigt, ist der Druckregel-Kanal 20 mit einem aufschraubbaren Druckregel-Einheit-Verschluss 22 gegenüber der Umgebung abgedichtet. Die Druckregel-Einheit 21 ist über einen Niederdruck-Kanal 23 mit einer Niederdruck-Kammer 24 verbunden.

Konzentrisch zur Längsachse 13 weist der Ventil-Eingangs-Kanal 17 einen Ventilsitz 25 auf, auf dem gemäß den Figuren 4 und 5 ein Schließ-Kolben 26 mit einer Ventilsitz-Dichtung 27 abdichtend angeordnet ist.

Ein eine Ausgangs-Kanal-Längsachse 28 aufweisender Ventil-Ausgangs-Kanal 29 mit einer Ventil-Ausgangs-Öffnung 30 ist mit dem Ventil-Eingangs-Kanal 17 derart verbunden, dass sich die Längsachse 13 und die Ausgangs-Kanal-Längsachse 28 unter einem 90°-Winkel schneiden. Es ist auch möglich, dass die beiden Längsachsen 13, 28 quer zueinander verlaufen und ein von den Längsachsen 13, 28 eingeschlossener Winkel größer als 0° und kleiner als 90° ist. Der Ventilsitz 25 ist an einem Übergang zwischen dem Ventil-Ausgangs-Kanal 29 und dem Ventil-Eingangs-Kanal 17 und somit zwischen der Ventil-Ausgangs-Öffnung 30 und der Ventil-Eingangs-Öffnung 16 angeordnet. In der in den Figuren 2 bis 7 dargestellten Ausführung des Ventils 3 ist auf den Ventil-Ausgangs-Kanal 29 an der Ventil-Ausgangs-Öffnung 30 eine Ventil-Kappe 31 aufgeschraubt, um die Ventil-Ausgangs-Öffnung 30 während eines Transports des Ventils 3 vor Verschmutzung und/oder Beschädigung zu schützen sowie im Falle eines unbeabsichtigten Öffnens des Ventils die Gefahr eines unkontrollierten raschen Gasaustritts zu vermeiden.

In der in den Figuren 4 und 5 gezeigten Anordnung des Schließ-Kolbens 26 ist dieser in einer Schließ-Kolben-Schließstellung angeordnet, wobei die Ventilsitz-Dichtung 27 auf dem Ventilsitz 25 fluiddicht angeordnet ist und somit die Ventil-Eingangs-Öffnung 16 gegenüber der Ventil-Ausgangs-Öffnung 30 abgedichtet ist. Die beiden Öffnungen 16, 30 sind in der Schließ-Kolben-Schließstellung druckmäßig voneinander getrennt.

Der Schließ-Kolben 26 ist in dem Ventil-Gehäuse 14 abgedichtet und entlang der Längsachse 13 verlagerbar. Der Schließ-Kolben 26 weist eine Druckausgleichs-Bohrung 32 auf, die konzentrisch zur Längsachse 13 angeordnet ist. An einem dem Ventil-Eingangs-Kanal 17 abgewandten Ende der Druckausgleichs-Bohrung 32 weist diese einen senkrecht zur Längsachse 13 reduzierten Querschnitt auf, sodass eine Strömung des Brandlöschmediums von dem Ventil-Eingangs-Kanal 17 durch die Druckausgleichs-Bohrung 32 in eine Hochdruck-Kammer 33 ermöglicht ist. Die Hochdruck-Kammer 33 weist einen bezüglich der Längsachse 13 vergrößerten Querschnitt gegenüber einen entsprechenden Querschnitt des Ventil-Eingangs-Kanals 17 auf, sodass bei einem Druckgleichgewicht in dem Ventil-Eingangs-Kanal 17 und der Hochdruck-Kammer 33 der Schließ-Kolben 26 aufgrund der in der Hochdruck-Kammer 33 größeren Druck-Querschnittsfläche auf den Ventilsitz 25 gepresst ist.

An einer der Ventilsitz-Dichtung 27 gegenüberliegenden Stirnfläche 34 des Schließ-Kolbens 26 ist ein Dämpfungs-Element 35 vorgesehen. Das Dämpfungs-Element 35 ist ringscheibenförmig ausgebildet mit einer zentrischen Bohrung 36, die konzentrisch zur Druckausgleichs-Bohrung 32 angeordnet ist und somit zusammen mit der Drucksausgleichs-Bohrung 32 einen gemeinsamen Strömungskanal für das Brandlöschmedium oder Druckmedium von dem Ventil-Eingangs-Kanal 17 in die Hochdruck-Kammer 33 bildet. In der Darstellung gemäß den Figuren 4 und 5 liegt das Dämpfungs-Element 35 an der Stirnfläche 34 des Schließ-Kolbens 26 an. Mit einem Mittenabschnitt 37, der gegenüber einem Randabschnitt des Dämpfungs-Elements 35 eine entlang der Längsachse 13 erhöhte Dicke aufweist, ist das Dämpfungs-Element 35 in einer dazu korrespondierenden Ausnehmung der Stirnfläche 34 des Schließ-Kolbens 26 bezüglich der Längsachse 13 zentriert.

Ein Zwischen-Element 38 ist derart in das Ventil-Gehäuse 14 eingeschraubt, dass es mit einer unteren Stirnfläche 39 dem Dämpfungs-Element 35 zugewandt ist. Das Dämpfungs-Element 35 ist also zwischen dem Schließ-Kolben 26 und dem Zwischen-Element 38 angeordnet. Ausgehend von der Stirnfläche 39 ist an dem Zwischen-Element 38 eine zylindrische Ausnehmung 40 vorgesehen, in der eine Schließ-Kolben-Feder 41 geführt gehalten ist. Die Schließ-Kolben-Feder 41 weist einen Innendurchmesser auf, der größer ist als ein Durchmesser des Mittenabschnitts 37 des Dämpfungs-Elements 35, sodass das Dämpfungs-Element 35 mit dem Mittenabschnitt 37 in einen von der Schließ-Kolben-Feder 41 umgebenen Innenraum eindringen kann. Die Schließ-Kolben-Feder 41 ist zwischen dem Zwischen-Element 38 und dem Dämpfungs-Element 35 angeordnet und wirkt mit einer Federkraft auf den Schließ-Kolben 26 entlang der Längsachse 13 in Richtung des Ventilsitzes 25. Das Dämpfungs-Element 35 dient zur Dämpfung eines Anschlagens des von dem Ventilsitz 25 wegverlagerten Schließ-Kolbens 26 gegen das Zwischen-Element 38.

In Verlängerung der Ausnehmung 40 und konzentrisch zur Längsachse 13 angeordnet, ist ein Druck-Kanal, der eine entlang der Längsachse 13 angeordnete Längsbohrung 42 und eine quer dazu, insbesondere senkrecht dazu, ausgerichtete Querbohrung 43 umfasst.

Das Zwischen-Element 38 ist im Wesentlichen hohlzylindrisch ausgeführt mit einem Sockel 44, der zum Einschrauben des Zwischen-Elements 38 in das Ventil-Gehäuse 14 ein entsprechendes Außengewinde aufweist. Ausgehend von dem Sockel 44 erstreckt sich entlang der Längsachse 13 ein unterer Abschnitt, der durch die Ausnehmung 40 und die untere Stirnfläche 39 begrenzt ist. Der untere Abschnitt des Zwischen-Elements 38 ist gegenüber dem Ventil-Gehäuse 14 abgedichtet. Weiterhin weist das Zwischen-Element 38 eine sich nach oben von dem Sockel 44 entlang der Längsachse sich erstreckende Druck-Kanal-Säule 45 auf. An einer äußeren Mantelfläche der Druck-Kanal-Säule 45 sind in entsprechenden Nuten ein unteres Dicht-Element 46 und ein oberes Dicht-Element 47 angeordnet. Die Dicht-Elemente 46, 47 sind entlang der Längsachse 13 beabstandet zueinander angeordnet. Die Querbohrung 43 des Druck-Kanals ist entlang der Längsachse 13 zwischen den beiden Dicht-Elementen 46, 47 angeordnet. Das Zwischen-Element 38 ist derart in das Ventil-Gehäuse 14 eingeschraubt, dass benachbart zu einer unteren Stirnfläche 48 des Sockels 44 zwischen dem Zwischen-Element 38 und dem Ventil-Gehäuse 14 eine Kavität 49 gebildet ist. Die Kavität 49 ist Teil der Niederdruck-Kammer 24 und über den Niederdruck-Kanal 23 an die Druckregel-Einheit 21 angeschlossen. Die Kavität 49 ist über zwei parallel zur Längsachse 13 ausgerichtete Niederdruck-Bohrungen 50 mit einem oberhalb des Zwischen-Elements 38 angeordneten Innenraum 51 des Ventil-Gehäuses 14 verbunden. Entsprechend ist auch der Innenraum 51 Teil der Niederdruck-Kammer 24.

Der Innenraum 51 wird in radialer Richtung bezüglich der Längsachse 13 durch das Ventil-Gehäuse 14, in axialer Richtung bezüglich der Längsachse 13 in Richtung der Ventil-Eingangs-Öffnung 16 durch das Zwischen-Element 38 und in einer axial entgegengesetzten Richtung durch einen Steuer-Kolben 52 begrenzt. Der Steuer-Kolben 52 ist im Wesentlichen hohlzylindrisch ausgeführt, wobei in einem Führungsabschnitt 53 des Steuer-Kolbens 52 dieser auf der Druck-Kanal-Säule 45 des Zwischen-Elements 38 geführt und durch die Dicht-Elemente 46, 47 abgedichtet ist. Der Steuer-Kolben 52 ist an einer äußeren Mantelfläche gegenüber dem Ventil-Gehäuse 14 abgedichtet. In dem Führungsabschnitt 53 sind in einem oberen, dem Zwischen-Element 38 abgewandten Bereich mehrere Quer-Entlüftungsbohrungen 54 vorgesehen. Ausgehend von dem Führungsabschnitt 53 ist entlang der Längsachse 13 in Richtung des Zwischen-Elements 38 ein Druckverbindungsabschnitt 55 derart vorgesehen, dass ein Innendurchmesser des Steuer-Kolbens 52 größer als ein Außendurchmesser des an der Druck-Kanal-Säule 45 angeordneten unteren Dicht-Elements 46 ist, sodass ausgehend von der Hochdruck-Kammer 33 über die Längsbohrung 42 und die Querbohrung 43 des Druck-Kanals und den Druckverbindungsabschnitt 55 eine Druckverbindung zur Niederdruck-Kammer 24 gegeben ist.

Der Steuer-Kolben 52 befindet sich gemäß den Darstellungen in Figur 4 und 5 in einer Steuer-Kolben-Offenstellung. In der Steuer-Kolben-Offenstellung ist der Steuer-Kolben 52 beabstandet zu einem koaxial zur Längsachse 13 auf das Ventil-Gehäuse 14 aufgeschraubten Gehäuse-Deckel 56 entlang der Längsachse 13 angeordnet. An einem oberen, dem Gehäuse-Deckel 56 zugewandten Ende des Steuer-Kolbens 52 ist ein Dauermagnet 57 angeordnet, der zur Auslösung eines Schaltsignals mit einem in Form eines Reed-Schalters gestalteten Signalgeber 58, der ortsfest in dem Gehäuse-Deckel 56 angeordnet ist, zusammenwirkt. Der Signalgeber 58 dient zur Erkennung einer Auslösung eines Löschvorgangs durch das Ventil 3. Der Reed-Schalter weist in an sich bekannter Weise zwei nicht näher dargestellte Reed-Kontakte auf, die jeweils ein halbkreisförmiges Magnetfeld derart aufweisen, dass bei Annäherung des Dauermagneten 57 die Kontakte geschlossen werden und somit ein Schaltsignal von dem Reed-Schalter ausgelöst wird. Die Kontakte bleiben - je nach Schaltart des Reed-Schalters - geschlossen bzw. geöffnet, solange sich der Dauermagnet 57 innerhalb zumindest einer der beiden Halbkreisflächen befindet. Sobald der Dauermagnet 57 die Halbkreisflächen verlässt, öffnen bzw. schließen die Reed-Kontakte. Die Grenze der Halbkreisbereiche, an welchen der Dauermagnet 57 die Schaltbereiche des Reed-Schalters verlässt, wird als Schalt-Abstand bezeichnet und legt eine Schaltposition des Steuerkolbens 52 fest. Der Signalgeber 58 steht mit einer nur schematisch dargestellten Steuer-/Regelungseinheit 59 der Brandlöschanlage 1 in Signalverbindung, um beispielsweise bei Auslösung eines Löschvorgangs mit der Steuer-/Regelungseinheit 59 verbundene Aggregate und weitere Geräte abzuschalten.

Zwischen dem Steuer-Kolben 52 und dem Gehäuse-Deckel 56 ist eine Steuer-Kolben-Feder 60 angeordnet, die eine Federkraft auf den SteuerKolben 52 entlang der Längsachse 13 in Richtung des Zwischen-Elements 38 ausüben kann. In der in Figur 4 und 5 dargestellten Steuer-Kolben-Offenstellung ist die Steuer-Kolben-Feder 60 entspannt und wirkt auf den Steuer-Kolben 52 keine oder eine nur geringe Vorspannkraft aus.

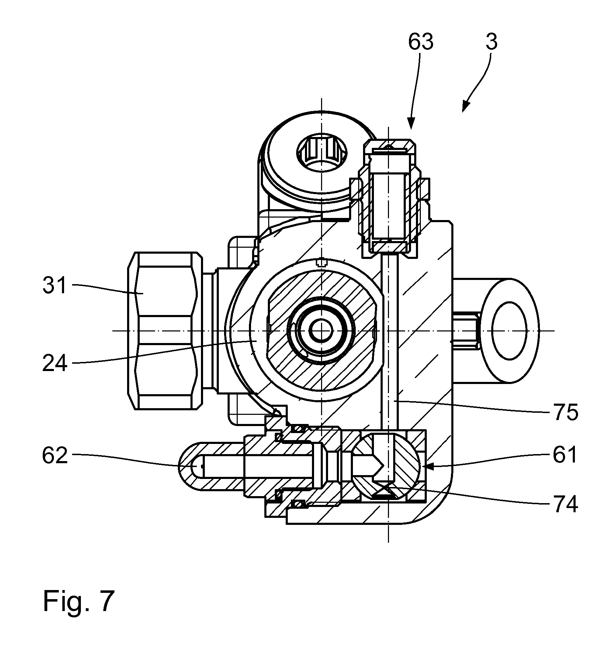

Die Niederdruck-Kammer 24 ist, wie in Figur 7 dargestellt, über ein Drossel-/Sperr-Ventil 61 mit einer Auslöse-Öffnung in Form einer Steckverschraubung 62 verbunden, auf die die Auslöse-Vorrichtung, d. h. die Sensorleitung 5 aufsteckbar ist. In den Figuren 2 bis 7 ist die Sensorleitung 5 nicht an das Ventil 3 angeschlossen.

Für einen Druckausgleich des Ventils 3 mit der Umgebung ist mit der Niederdruck-Kammer 24 ebenfalls ein federbelastetes Abblas-Ventil 63 verbunden. Die Niederdruck-Kammer 24 ist über eine im Ventil-Gehäuse 14 eingebrachte Niederdruck-Querbohrung 75 mit dem Drossel-/Sperr-Ventil 61 und damit mit der Steckverschraubung 62 und der Sensorleitung 5 verbunden. Die Niederdruck-Querbohrung 75 verbindet zudem das Abblas-Ventil 63 mit dem Drossel-/Sperr-Ventil 61. Das Drossel-/Sperr-Ventil 61 ist von außerhalb des Ventil-Gehäuses 14 mittels eines Schwenk-Hebels 64 zwischen einer Sperrposition, einer Drosselposition und einer Offenposition anordenbar. Dazu kann das Drossel-/Sperr-Ventil 61, das als Kugelabsperrventil ausgeführt ist, um eine parallel zur Längsachse 13 verlaufende Schwenkachse verschwenkt werden. Das Drossel-/Sperr-Ventil 61 ist bezüglich der Schwenkachse drehfest mit dem Schwenk-Hebel 64 verbunden. Gemäß der Darstellung in Figur 7 befindet sich das Drossel-/Sperr-Ventil 61 in der Offenposition, d. h. eine Druckverbindung von der Niederdruck-Kammer 24 über das Drossel-/Sperr-Ventil 61 zu der Steckverschraubung 62 und damit zu der anschließbaren Auslöse-Vorrichtung 5 ist gegeben. Zur Überwachung einer Stellung des Schwenk-Hebels 64 und damit einer korrespondierenden Position des Drossel-/Sperr-Ventils 61 ist ein weiterer, dem Signalgeber 58 funktionsähnlicher Schwenk-Hebel-Signalgeber 65 vorgesehen. Auch der Schwenk-Hebel-Signalgeber 65 ist an die zentrale Steuer-/Regelungseinheit 59 angeschlossen.

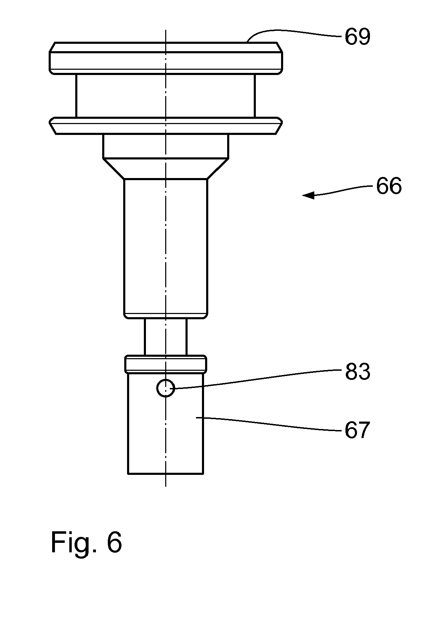

Im Folgenden wird die Druckregel-Einheit 21 näher beschrieben. Die Druckregel-Einheit 21 umfasst einen längs des Druckregel-Kanals 20 abgedichtet verschiebbaren Druckregel-Kolben 66, der mit einem Schließ-Element 67 auf einem Dichtsitz 68 des Druckregel-Kanals 20 derart anordenbar ist, dass der Druckregel-Kanal 20 gegenüber dem Ventil-Eingangs-Kanal 17 und damit gegenüber Druckbehälter 2 abgedichtet ist. Von dem Dichtsitz 68 wird eine in Längsrichtung des Druckregel-Kanals 20 wirkende Druckfläche begrenzt, die auf das Schließ-Element 67 derart wirkt, dass der Druckregel-Kolben 66 mit dem Schließ-Element 67 weg von dem Dichtsitz 68 gedrückt wird. Weiterhin weist der Druckregel-Kolben 66 eine dem Schließ-Element 67 gegenüberliegend angeordnete Druckfläche 69 auf, die dem Niederdruck-Kanal 23 und der damit verbundenen Niederdruck-Kammer 24 zugewandt ist. Ein auf die Druckfläche 69 wirkender Niederdruck p_{N} ist aufgrund der größer bemessenen Druckfläche 69 gegenüber der von dem Dichtsitz 68 begrenzten Druckfläche kleiner als ein auf das Schließ-Element 67 wirkender Behälterdruck p_{B} in dem Ventil-Eingangs-Kanal 17 und in dem Druckregel-Kanal 20. Der Niederdruck p_{N} entspricht dem Systemdruck p_{sys}, mit dem während des Betriebs des Ventils 3 die Niederdruck-Kammer 24 und die Sensorleitung 5 beaufschlagt werden. Der Druckregel-Kolben 66 ist in einem statischen Kräftegleichgewicht. Um eine Druckverbindung von dem Druckregel-Kanal 20 zu dem Niederdruck-Kanal 23 zu gewährleisten, weist der Druckregel-Kolben 66 konzentrisch zum Druckregel-Kanal 20 eine Verbindungsbohrung 70 auf. Das Schließ-Element 67 ist derart in dem Druckregel-Kanal 20 angeordnet, dass es, sobald es nicht mehr abdichtend am Dichtsitz 68 anliegt, von dem Brandlöschmedium oder Druckmedium entlang des Druckregel-Kanals 20 umströmt werden kann. Dazu ist das Schließ-Element 67 in Form eines hohlen Rechteck-Rahmens ausgebildet, wobei ein von dem RechteckRahmen umgebener Bereich 82 mit der Verbindungsbohrung 70 verbunden ist. Zusätzlich ist eine zur Verbindungsbohrung 70 senkrecht angeordnete Schließ-Element-Querbohrung 83 vorgesehen, so dass eine Druckverbindung von der Verbindungsbohrung 70 über die Schließ-Element-Querbohrung 83 um das Schließ-Element 67 herum in den Druckregel-Kanal 20 existiert, sofern der Dichtsitz 68 nicht durch das Schließ-Element 67 abgedichtet ist. Weiterhin kann das Brandlöschmedium oder Druckmedium von dem Druckregel-Kanal 20 über den Bereich 82 in die Verbindungsbohrung 70 strömen und von den dort über den Niederdruck-Kanal 23 in die Niederdruck-Kammer 24 gelangen. In Fig. 6 ist der Druckregel-Kolben 66 in einer der Fig. 4 entsprechenden Seitenansicht dargestellt.

Im Folgenden werden die mit dem Ventil 3 durchführbaren Funktionen näher erläutert. Gemäß den Darstellungen in den Figuren 4, 5 und 7 befindet sich das Ventil 3 in einem drucklosen Grundzustand. Das Ventil 3 ist auf dem nicht dargestellten Druckbehälter 2 aufgesetzt, insbesondere verschraubt. Der Druckbehälter 2 ist entleert und somit ebenfalls drucklos. In dieser Anordnung befindet sich die Druckregel-Einheit 21 in einer Offenstellung, d. h. das Schließ-Element 67 ist von dem Dichtsitz 68 beabstandet. Dagegen ist der Schließ-Kolben 26 in der Schließ-Kolben-Schließstellung, d. h. der Schließ-Kolben 26 liegt mit der Ventilsitz-Dichtung 27 abdichtend auf dem Ventilsitz 25 an. Der Steuerkolben 52 befindet sich in der Steuer-Kolben-Offenstellung, d. h. der sich entlang des Zwischen-Elements 38 erstreckende Druck-Kanal 42, 43 ist über den Druckverbindungsabschnitt 55 mit der Niederdruck-Kammer 24 verbunden. Weiterhin befindet sich das Drossel-/Sperr-Ventil 61 in der Offenposition, sodass die Niederdruck-Kammer 24 mit Steckverschraubung 62 zum Anschließen der nicht dargestellten Sensorleitung 5 in Druckverbindung steht.

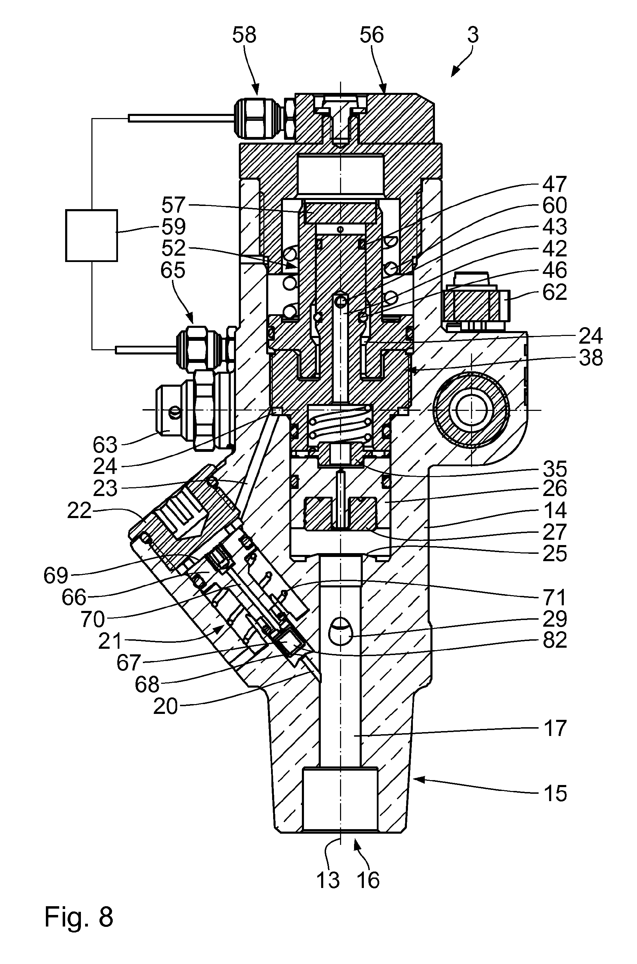

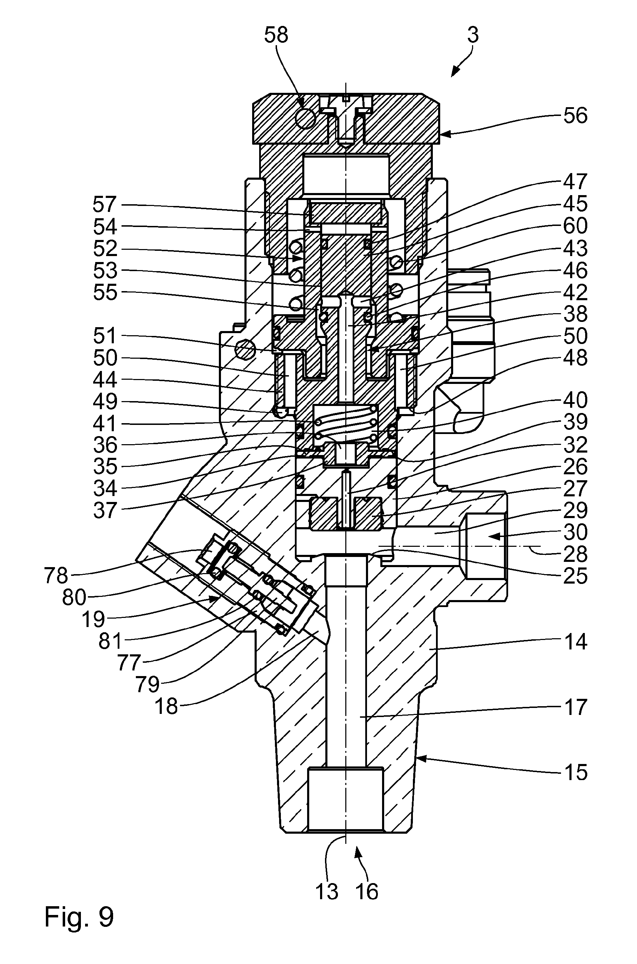

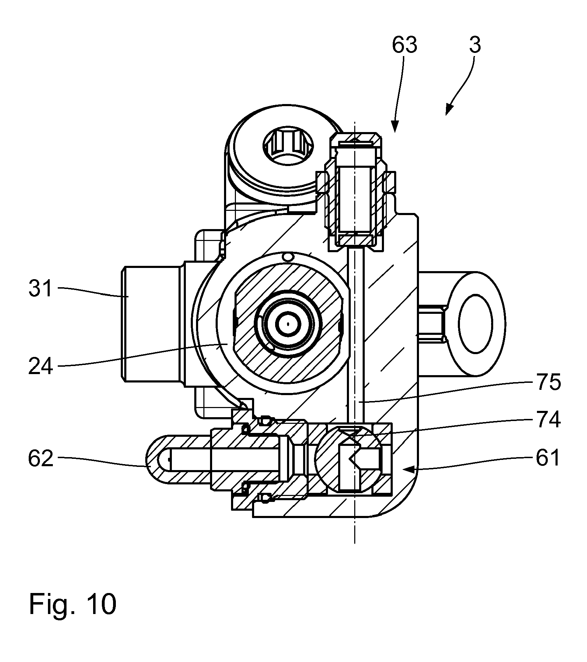

Während eines in Figur 8 bis 10 dargestellten Füllvorgangs des Druckbehälters 2 über das Ventil 3 wird eine nicht dargestellte Füllleitung an der Ventil-Ausgangs-Öffnung 30 angeschlossen. Füllmedium wird mit Fülldruck p_{füll} in den Ventil-Ausgangs-Kanal 29 befördert. Aufgrund des dynamischen Fülldrucks p_{füll} wird der Schließ-Kolben 26 mit der Ventilsitz-Dichtung 27 von dem Ventilsitz 25 des Ventilgehäuses 14 abgehoben, sodass der Ventil-Ausgangs-Kanal 29 mit dem Ventil-Eingangs-Kanal 17 verbunden ist. Somit gelangt das Brandlöschmedium und/oder das Druckmedium in den nicht dargestellten Druckbehälter 2 und, da sich die Druckregel-Einheit 21 nach wie vor in einer Offenstellung befindet, strömt das Brandlöschmedium über den Druckregel-Kanal 20, die Druckregel-Einheit 21 und den Niederdruck-Kanal 23 in die Niederdruck-Kammer 24. Dadurch, dass sich das Drossel-/Sperrventil 61 in die Sperrposition befindet (Figur 10), ist die Niederdruck-Kammer 24 gegenüber der Umgebung an der Steckverschraubung 62 abgedichtet. Das bedeutet, dass der Druck in dem Innenraum 51, d. h. der Druck zwischen Drossel-/Sperr-Ventil 61 und Druckregel-Einheit 21 einerseits sowie zwischen Drossel-/Sperr-Ventil 61 und Schließ-Kolben 26 andererseits, zu einer Verlagerung des Steuer-Kolbens 52 entlang der Längsachse 13 von der Steuer-Kolben-Offenstellung in Richtung des Gehäuse-Deckels 56 in die Steuer-Kolben-Schließstellung führt.

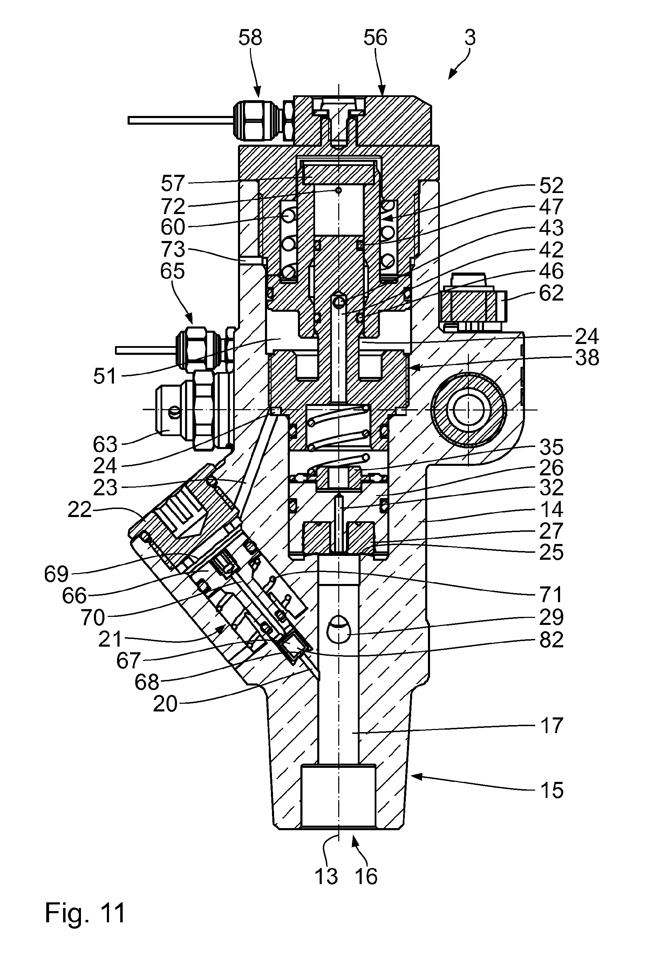

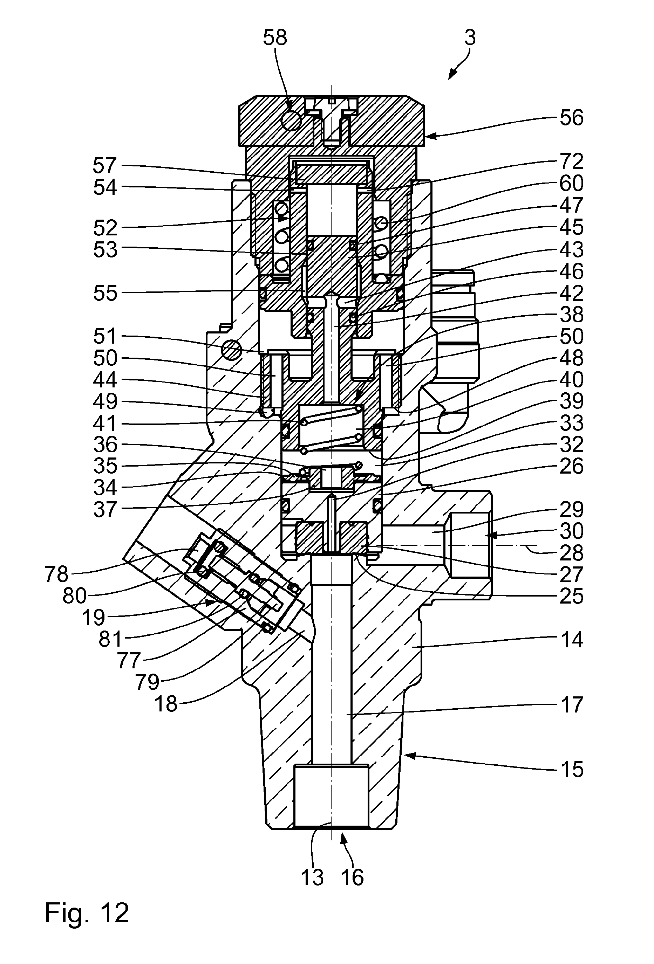

Der Steuer-Kolben 52 erreicht die Steuer-Kolben-Schließstellung, die in den Figuren 11 und 12 dargestellt ist, gemäß dem gezeigten Ausführungsbeispiel, sobald der Fülldruck p_{füll} etwa 4 bar erreicht. In der Steuer-Kolben-Schließstellung sind die beiden Dicht-Elemente 46, 47 jeweils in dem Führungsabschnitt 53 des Steuer-Kolbens 52 derart angeordnet, dass eine Druckverbindung des Druck-Kanals über den Druckverbindungsabschnitt 55 abgedichtet ist. Somit kann nicht weiteres Brandlöschmedium oder Druckmedium von dem Druckbehälter 2 über die Druckausgleichs-bohrung 32 in dem Schließ-Kolben 26 zu dem Drossel-/Sperr-Ventil 61 gelangen.

Die Druckregel-Einheit 21 befindet sich gegenüber dem Steuer-Kolben 52 während des Füllvorgangs bis zu einem späteren Zeitpunkt in geöffneter Position, d. h. bei dem gezeigten Ausführungsbeispiel bis der Niederdruck p_{N}, der auf die Druckfläche 69 des Druckregel-Kolbens 66 wirkt, etwa 15 bis 20 bar erreicht. Dieser Niederdruck p_{N} ist ausreichend, um den Druckregel-Kolben 66 mit dem Schließ-Element 67 auf den Dichtsitz 68 entgegen dem wirkenden Fülldruck in dem Druckregel-Kanal 20 zu drücken und den Druckregel-Kanal 20 abzudichten. Der Niederdruck p_{N} wirkt somit auf einer sogenannten Niederdruckseite des Druckregel-Kolbens 66, d. h. auf die Druckfläche 69 des Druckregel-Kolbens 66, den Niederdruck-Kanal 23, die Niederdruck-Kammer 24 mit dem Innenraum 51 und den Niederdruck-Bohrungen 50. In dieser Anordnung der Druckregel-Einheit 21 wird eine Druckregel-Feder 71 von dem Druckregel-Kolben 61 derart komprimiert, dass eine Reaktionskraft der Druckregel-Feder 71 auf den Druckregel-Kolben 66 entgegen dem auf die Druckfläche 69 wirkenden Niederdruck p_{N} wirkt.

In der Steuer-Kolben-Schließstellung ist der Steuer-Kolben 52 in einer obersten Position in dem Ventil-Gehäuse 14 derart angeordnet, dass die Steuer-Kolben-Feder 60 maximal zusammengedrückt ist und somit eine auf den Steuer-Kolben 52 entlang der Längsachse 13 in Richtung des Zwischen-Elements 38 wirkende Reaktionskraft wirkt. Durch die Verlagerung des Steuer-Kolbens 52 während des Füllvorgangs von der unteren Steuer-Kolben-Offenstellung in die obere Steuer-Kolben-Schließstellung kann in dem Ventil-Gehäuse 14 vorhandenes und durch die Verlagerung des Steuer-Kolben 52 verdrängtes Gas durch Steuer-Kolben-Entlüftungsbohrungen 72 und/oder durch eine Ventil-Gehäuse-Entlüftungsbohrung 73 entlüftet und/oder verdrängt werden. Nach Beendigung des Füllvorgangs, also bei Erreichen des gewünschten Fülldrucks, wird durch kontrolliertes Entlüften der Füllleitung von der Ventil-Ausgangs-Öffnung 30 der durch den Schließ-Kolben 26 abgedichtete Ventil-Ausgangs-Kanal 29 ebenfalls entlüftet. In der Darstellung gemäß den Figuren 11 und 12 ist der Füllvorgang des Druckbehälters 2 abgeschlossen.

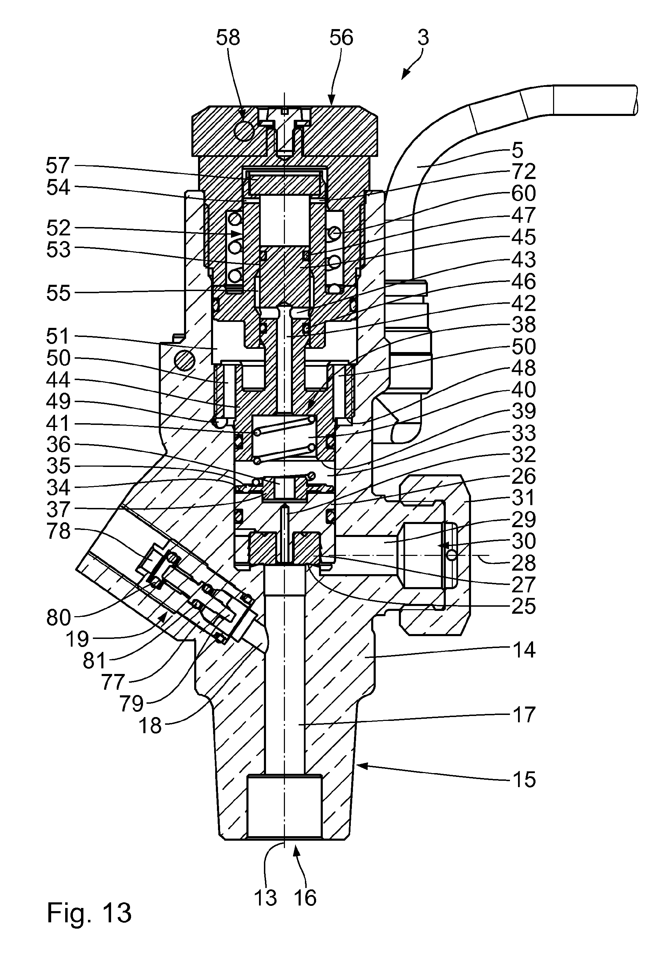

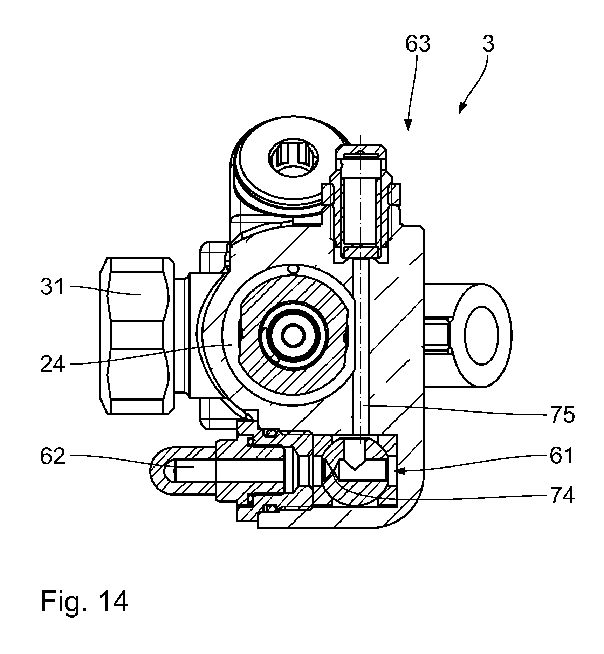

Im Folgenden wird anhand der Figuren 13 und 14 ein Befüllen der Sensorleitung 5 näher beschrieben. Dazu wird die Sensorleitung 5 an die Steckverschraubung 62 des Ventils 3 angeschlossen. Wie ebenfalls aus den Figuren 13 und 14 ersichtlich, ist die Ventil-Ausgangs-Öffnung 30 mittels der Ventilkappe 31 aus Schutzgründen verschlossen. Zur Befüllung der Sensorleitung 5 wird das Drossel-/Sperr-Ventil 61 mittels des Schwenk-Hebels 64 von der Sperrposition in eine Drosselposition verlagert, die in Figur 14 dargestellt ist. Die Drosselposition des Drossel-/Sperr-Ventils 61 zeichnet sich dadurch aus, dass eine Druckverbindung von der Niederdruck-Kammer 24 innerhalb des Ventils 3 über eine Drossel-Engstelle 74 in dem Drossel-/Sperr-Ventil 61 mit der Steckverschraubung 62 und damit mit der Sensorleitung 5 verbunden ist. Die Drossel-Engstelle 74 weist entlang einer Strömungsrichtung des Brandlöschmediums einen gegenüber der Sensorleitung 5 reduzierten Querschnitt von etwa 0,2 mm auf. Besonders vorteilhaft ist dabei, dass aufgrund der Drosselfunktion der Drossel-Engstelle 74 in dem Drossel-/Sperr-Ventil 61 eine langsame Befüllung der Sensorleitung 5 ermöglicht. Das bedeutet, dass während des Befüllens der Sensorleitung 5 über die Druckregel-Einheit 21 der Niederdruck p_{N} in der Niederdruck-Kammer 24 nahezu konstant bei den zuvor eingestellten 15 bis 20 bar gehalten wird, sodass der Steuer-Kolben 52 in der Steuer-Kolben-Schließstellung verbleibt. Dadurch wird eine Beschädigung der Sensorleitung 5 und ein Auslösen des Ventils 3 während des Befüllens der Sensorleitung 5 vermieden. Sobald in der Sensorleitung 5 der Niederdruck p_{N} von etwa 15 bis 20 bar anliegt, wird das Drossel-/Sperr-Ventil 61 durch Betätigung des Schwenk-Hebels 64 von der Drosselposition in die Offenposition, die in Figur 7 dargestellt ist, verlagert. In der Offenposition ist die Niederdruck-Kammer 24 über eine Druckverbindung mit der Steckverschraubung 62 und damit mit der Sensorleitung 5 verbunden, ohne dass eine signifikante Querschnittsreduktion der Druckverbindung entlang der Fluidströmungsrichtung vorliegt. In dieser Stellung des Drossel-/Sperr-Ventils 61 ist das Ventil 3 betriebsbereit.

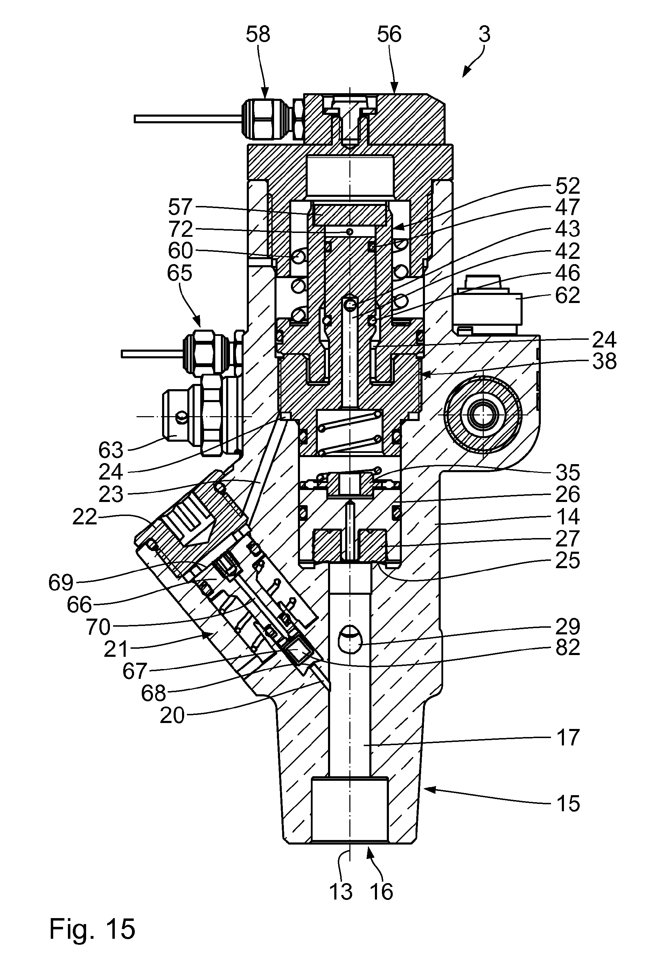

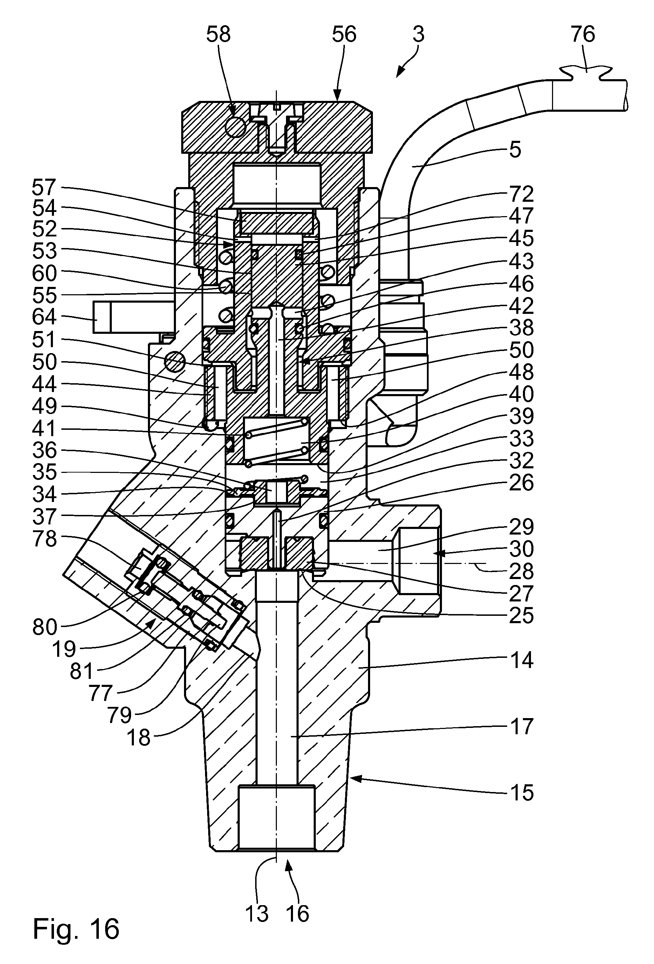

Im Folgenden wird anhand der Figuren 15 und 16 eine Auslösung bzw. Aktivierung des Ventils 3 in einem Brandfall näher beschrieben. Dazu ist die Ventilkappe 31 von der Ventil-Ausgangs-Öffnung 30 des Ventils 3 entfernt und an den Ventil-Ausgangs-Kanal 29 die nicht dargestellte Löschleitung 6 angeschlossen. Im Falle eines Brandes platzt die Sensorleitung 5 und der Druck in der Sensorleitung 5 fällt schlagartig ab. Eine Öffnung 76 des Sensorschlauchs 5 infolge des Platzens ist in Figur 16 schematisch dargestellt. Dadurch wird das Ventil 3, wie im Folgenden beschrieben, aktiviert. Da die Öffnung 76 der Sensorleitung 5 infolge des Platzens um ein Vielfaches größer ist als ein Querschnitt der Druckausgleichs-Bohrung 32 des Schließ-Kolbens 26 sowie wie die Verbindungsbohrung 70 des Druckregel-Kolbens 66 der Druckregel-Einheit 21 kann weder der in der Hochdruck-Kammer 33 anliegende Behälterdruck p_{B} noch der in der Niederdruck-Kammer 24 anliegende Niederdruck p_{N} aufrechterhalten werden.

Dadurch, dass der Druck p_{N} in der Niederdruck-Kammer 24 und insbesondere in dem Innenraum 51 unterhalb des Steuer-Kolbens 52 abfällt, wird der Steuer-Kolben 52 aufgrund der auf ihn wirkenden Steuer-Kolben-Federkraft der Steuer-Kolben-Feder 60 entlang der Längsachse 13 in Richtung des Zwischen-Elements 38 in die Steuer-Kolben-Offenstellung verschoben. Diese Anordnung ist in den Figuren 15 und 16 gezeigt. Dadurch wird die Hochdruck-Kammer 33 oberhalb des Schließ-Kolbens 26 über die Längsbohrung 42 und die Querbohrung 43 des Druck-Kanals in der Druck-Kanal-Säule 45 entlüftet. Entsprechend bewirkt der Behälterdruck p_{B}, der im Ventil-Eingangs-Kanal 17 anliegt und auf den Schließ-Kolben 26 längs der Längsachse 13 weg vom Druckbehälter 2 wirkt, dass der Schließ-Kolben 26 von dem Ventilsitz 25 abgehoben wird. Dadurch ist das Ventil 3 geöffnet, sodass Brandlöschmedium und/oder Druckmedium aus dem Druckbehälter 2 über den Ventil-Eingangs-Kanal 17, den Ventilsitz 25 hinweg und durch den Ventil-Ausgangs-Kanal 29 in die Löschleitung 6 und somit zu den Löschdüsen 7 beim zu schützenden Objekt strömt.

Über die Druckausgleichs-Bohrung 32 des Schließ-Kolbens 26 und über die Verbindungsbohrung 70 der Druckregel-Einheit 21 kann auch während des ausgelösten Löschvorgangs kontinuierlich eine unwesentliche Menge Gas über die Öffnung 76 in der Sensorleitung 5 ausströmen. Jedoch ist diese Menge derart gering, dass in der Sensorleitung 5 kein Druckaufbau erfolgt, der zum Schließen des Ventils 3 führen könnte. In Abhängigkeit einer maximal zulässigen Länge der Sensorleitung 5 können die dafür erforderlichen Systemgrenzen ermittelt werden.

Mit Fortschreiten des Löschvorgangs wird der Behälterdruck p_{B} in dem Druckbehälter 2 kontinuierlich reduziert. Wenn der Behälterdruck p_{B} klein genug ist, verursacht die auf den Schließ-Kolben 26 wirkende Schließ-Kolben-Feder 41, dass der Schließ-Kolben 26 wieder nach unten in Richtung des Ventilsitzes 25 verlagert wird. In dieser Anordnung, d. h. nach der Entleerung des Druckbehälters 2 ist das Ventil 3 verschlossen, jedoch aufgrund mangelnden Drucks in der Hochdruck-Kammer 33 liegt der Schließ-Kolben 26 mit der Ventilsitz-Dichtung 27 nicht gasdicht am Ventilsitz 25 an. Diese Anordnung des Schließ-Kolbens 26 ist jedoch ausreichend, um einen Eintritt von Schmutz und/oder Feuchtigkeit in das Ventil 3 zu vermeiden.

Die Position des Drossel-/Sperr-Ventils 61 ist für die Funktionssicherheit der Brandlöschanlage 1 mit der Sensorleitung 5 wichtig. Dies gilt insbesondere bei der Verwendung des Ventils 3 zur Anbindung der Sensorleitung 5 an den Druckbehälter 2. Aufgrund der gezeigten Gestaltung des Ventils 61 wird einerseits ermöglicht, die Sensorleitung 5 in der Drosselposition kontrolliert mit dem Niederdruck p_{N} zu beaufschlagen und andererseits eine Positionsüberwachung des Ventils 61 durch den Schwenk-Hebel-Signalgeber 65 zu überwachen. Dadurch kann vermieden werden, dass die Sensorleitung 5 über eine externe Druckversorgung und nach erfolgter Installation der Brandlöschanlage 1 mit einem Behälterdruck p_{B} beaufschlagt wird. Dies kann beispielsweise durch sehr langsames Öffnen eines entsprechenden Ventils erfolgen, wobei aufgrund einer komplizierten Handhabung derartiger Ventile mit entsprechenden Arretierungen häufig ungewollt eine Aktivierung des Ventils und damit der Brandlöschanlage ausgelöst wird. Durch die Positionsüberwachung des Drossel-/Sperr-Ventils 61 mit dem Schwenk-Hebel-Signalgeber 65 kann die Funktionsbereitschaft des Ventils 61 signalisiert werden. Das bedeutet, dass beispielsweise ein entsprechendes Signal an eine Brandmeldezentrale ausgelöst werden könnte, sobald das Ventil 61 nicht in der Offenposition angeordnet ist. Nur in der Offenposition befindet sich das Ventil 3 in einem Betriebszustand, in dem die Auslösung des Ventils einen Löschvorgang auslösen könnte. Sofern das Ventil 61 in der Sperrposition oder in der Drosselposition angeordnet ist, kann kein Löschvorgang mit dem Ventil 3 ausgelöst werden.

Dadurch, dass der Steuer-Kolben 52 infolge des Druckverlusts in dem Innenraum 51 in die Steuer-Kolben-Offenposition gemäß den Figuren 15 und 16 verlagert wird, wird der Abstand des Dauermagneten 57 zu dem in dem Gehäuse-Deckel 56 angeordneten Signalgeber 58 vergrößert. In der Steuer-Kolben-Offenstellung ist der Steuer-Kolben 52 derart zu dem Signalgeber 58 beabstandet, dass der Abstand des Dauermagneten 57 zu dem Signalgeber 58 größer ist als der Schaltabstand des Reed-Schalters. Entsprechend wird von dem Reed-Schalter ein Schaltsignal ausgelöst und über die Steuer-/Regelungseinheit 59 an zusätzliche Geräte und Aggregate wie beispielsweise Ventilatoren weitergeleitet, um diese abzuschalten. Dadurch wird ein Löschvorgang zusätzlich unterstützt und daher beschleunigt. Das Ergebnis des Löschvorgangs ist somit verbessert. Ein wesentlicher Vorteil des Signalgebers 58 ist, dass dieser keine Druckverbindung zu der Niederdruck-Kammer 24 und/oder zu der Hochdruck-Kammer 33 hat und somit keine Leckagequelle darstellt. Gegenüber bekannten Signalgebern ist der Signalgeber 58 wenig störanfällig und verursacht keine Verluste von Brandlöschmedium oder Druckmedium aufgrund von Leckagen.

## Patentansprüche

1. Ventil für einen Druckbehälter einer automatischen Brandlöschanlage, umfassend ein Ventil-Gehäuse (14) mit
a. einer Ventil-Ausgangs-Öffnung (30) zum Anschließen einer Löschleitung (6),
b. einer Ventil-Eingangs-Öffnung (16) zum Anschließen des Ventils (3) an den Druckbehälter (2),
c. einem zwischen der Ventil-Ausgangs-Öffnung (30) und der Ventil-Eingangs-Öffnung (16) angeordneten Ventilsitz (25),
d. einer Niederdruck-Kammer (24) zum Anschließen einer Auslöse-Vorrichtung (5) und
e. einer mit der Niederdruck-Kammer (24) verbindbaren Hochdruck-Kammer (33),
wobei in dem Ventil-Gehäuse (14) angeordnet ist
f. ein eine Ventilsitz-Dichtung (27) aufweisender Schließ-Kolben (26), der zwischen einer Schließ-Kolben-Schließstellung und einer Schließ-Kolben-Offenstellung verlagerbar ist,
g. ein zwischen einer Steuer-Kolben-Schließstellung und einer Steuer-Kolben-Offenstellung verlagerbarer Steuer-Kolben (52),
h. wobei der Schließ-Kolben (26) in der Schließ-Kolben-Schließstellung mit der Ventilsitz-Dichtung (27) auf dem Ventilsitz (25) fluiddicht angeordnet ist, so dass die Ventil-Ausgangs-Öffnung (30) gegenüber der Ventil-Eingangs-Öffnung (16) abgedichtet ist,
i. wobei der Schließ-Kolben (26) in der Schließ-Kolben-Offenstellung beabstandet zu dem Ventilsitz (25) angeordnet ist, so dass die Ventil-Ausgangs-Öffnung (30) und die Ventil-Eingangs-Öffnung (16) in Druckverbindung stehen,
j. wobei der Steuer-Kolben (52) in der Steuer-Kolben-Schließstellung einen Druck-Kanal (42, 43) zwischen der Hochdruck-Kammer (33) und der Niederdruck-Kammer (24) fluiddicht abdichtet, und
k. wobei der Steuer-Kolben (52) in der Steuer-Kolben-Offenstellung den Druck-Kanal (42, 43) freigibt, so dass die Hochdruck-Kammer (33) und die Niederdruck-Kammer (24) in Druckverbindung stehen,
**dadurch gekennzeichnet, dass**
l. in dem Ventil-Gehäuse (14) eine mit der Ventil-Eingangs-Öffnung (16) und der Niederdruck-Kammer (24) in Druckverbindung stehende Druckregel-Einheit (21) zur Regelung eines Niederdrucks (p_{N}) in der Niederdruck-Kammer (24) gegenüber einem Behälterdruck (p_{B}) des Druckbehälters (2) angeordnet ist und
m. ein Signalgeber (58) zur Erkennung einer Stellung des Steuer-Kolbens (52) in dem Ventil-Gehäuse (14) für eine Auslösung eines Löschvorgangs vorgesehen ist.

2. Ventil gemäß Anspruch 1, **gekennzeichnet durch** ein zwischen der Niederdruck-Kammer (24) und einer Auslöse-Öffnung (62) zum Anschließen der Auslöse-Vorrichtung (5) angeordnetes Drossel-/Sperr-Ventil (61) zum Regulieren einer Druckverbindung zwischen der Niederdruck-Kammer (24) und der Auslöse-Vorrichtung (5).

3. Ventil gemäß Anspruch 2, **dadurch gekennzeichnet, dass** das Drossel-/Sperr-Ventil (61) mittels eines Schwenk-Hebels (64) zwischen einer Sperrposition, einer Drosselposition und einer Offenposition anordenbar ist.

4. Ventil gemäß Anspruch 2 oder 3, **gekennzeichnet durch** einen Schwenk-Hebel-Signalgeber (65) zur Erfassung einer Position des Drossel-/Sperr-Ventils (61).

5. Ventil gemäß einem der vorangehenden Ansprüche, **gekennzeichnet durch** eine Druckausgleichs-Bohrung (32) in dem Schließ-Kolben (26) zur Druckverbindung der Ventil-Eingangs-Öffnung (16) mit der Hochdruck-Kammer (33).

6. Ventil gemäß einem der vorangehenden Ansprüche, **gekennzeichnet durch** die Druckregel-Einheit (21) derart, dass der Niederdruck (p_{N}) in der Niederdruck-Kammer (24) gegenüber dem Behälterdruck (p_{B}) in dem Druckbehälter (2) reduziert ist.

7. Ventil gemäß einem der vorangehenden Ansprüche, **gekennzeichnet durch** einen Anschluss (19) für ein Anschluss-Element, insbesondere ein Druckmessgerät (4).

8. Ventil gemäß einem der vorangehenden Ansprüche, **dadurch gekennzeichnet, dass** der Druck-Kanal (42, 43) durch ein Zwischen-Element (38) verläuft, wobei der Druck-Kanal (42, 43) durch den Steuer-Kolben (52) fluiddicht verschließbar ist.

9. Ventil gemäß Anspruch 8, **gekennzeichnet durch** eine Steuer-Kolben-Feder (60) derart, dass eine Federkraft auf den Steuer-Kolben (52) in Richtung des Zwischen-Elements (38) zur Öffnung des Druck-Kanals (42, 43) wirkt.

10. Ventil gemäß einem der vorangehenden Ansprüche, **gekennzeichnet durch** ein Dämpfungs-Element (35) zur Dämpfung eines Anschlagens des von dem Ventilsitz (25) weg verlagerten Schließ-Kolbens (26).

11. Ventil gemäß einem der vorangehenden Ansprüche, **gekennzeichnet durch** eine Schließ-Kolben-Feder (41) derart, dass eine Federkraft auf den Schließ-Kolben (26) in Richtung des Ventilsitzes (25) wirkt.

12. Ventil gemäß den Ansprüchen 10 und 11, **dadurch gekennzeichnet, dass** die Schließ-Kolben-Feder (41) zwischen dem Zwischen-Element (38) und dem Dämpfungs-Element (35) angeordnet ist.

## Claims

1. Valve for a pressure vessel of an automatic fire extinguishing system, comprising a valve housing (14) with
a. a valve output opening (30) for connecting an extinguishing line (6),
b. a valve input opening (16) for connecting the valve (3) to the pressure vessel (2),
c. a valve seat (25) arranged between the valve output opening (30) and the valve input opening (16),
d. a low pressure chamber (24) for connecting a triggering device (5) and
e. a high pressure chamber (33) which can be connected to the low pressure chamber (24),
wherein arranged in the valve housing (14) is
f. a closing piston (26) comprising a valve seat seal (27) which closing piston can be moved between a closing piston closed position and a closing piston open position,
g. a control piston (52) which can be moved between a control piston closed position and a control piston open position,
h. wherein the closing piston (26) in the closing piston closed position is arranged with the valve seat seal (27) on the valve seat (25) in a fluid-tight manner, so that the valve output opening (30) is sealed relative to the valve input opening (16),
i. wherein the closing piston (26) is arranged in the closing piston open position spaced apart from the valve seat (25), so that the valve output opening (30) and the valve input opening (16) are in pressure connection,
j. wherein the control piston (52) in the control piston closed position seals a pressure channel (42, 43) between the high pressure chamber (33) and the low pressure chamber (24) in a fluid-tight manner, and
k. wherein the control piston (52) in the control piston open position releases the pressure channel (42, 43), so that the high pressure chamber (33) and the low pressure chamber (24) are in pressure connection,
**characterized in that**
l. a pressure control unit (21) in pressure connection with the valve input opening (16) and the low pressure chamber (24) for controlling a low pressure (p_{N}) in the low pressure chamber (24) relative to a vessel pressure (p_{B}) of the pressure vessel (2) is arranged in the valve housing (14) and
m. a signal generator (58) for identifying a position of the control piston (52) in the valve housing (14) to trigger an extinguishing process is provided.

2. Valve according to claim 1, **characterized by** a throttle/stop valve (61) arranged between the low pressure chamber (24) and a triggering opening (62) for connecting the triggering device (5) for regulating a pressure connection between the low pressure chamber (24) and the triggering device (5).

3. Valve according to claim 2, **characterized in that** the throttle/stop valve (61) can be arranged by means of a pivot lever (64) between a stop position, a throttle position and an open position.

4. Valve according to claim 2 or 3, **characterized by** a pivot lever signal generator (65) for detecting the position of the throttle/stop valve (61).

5. Valve according to one of the preceding claims, **characterized by** a pressure equalization bore (32) in the closing piston (26) for the pressure connection of the valve input opening (16) with the high pressure chamber (33).

6. Valve according to one of the preceding claims, **characterized by** the pressure control unit (21) such that the low pressure (p_{N}) in the low pressure chamber (24) is reduced compared to the vessel pressure (p_{B}) in the pressure vessel (2).

7. Valve according to one of the preceding claims, **characterized by** a connection (19) for a connection element, in particular a pressure measuring device (4).

8. Valve according to one of the preceding claims, **characterized in that** the pressure channel (42, 43) runs through an intermediate element (38), whereby the pressure channel (42, 43) can be closed in a fluid-tight manner by the control piston (52).

9. Valve according to claim 9, **characterized by** a control piston spring (60) such that a spring force acts on the control piston (52) in the direction of the intermediate element (38) to open the pressure channel (42, 43).

10. Valve according to one of the preceding claims, **characterized by** a damping element (35) for damping impact on the closing piston (26) moved away from the valve seat (25).

11. Valve according to one of the preceding claims, **characterized by** a closing piston spring (41) such that a spring force acts on the closing piston (26) in the direction of the valve seat (25).

12. Valve according to claims 10 and 11, **characterized in that** the closing piston spring (41) is arranged between the intermediate element (38) and the damping element (35).

## Revendications

1. Soupape destinée à un récipient sous pression d'une installation d'extinction d'incendie automatique, comprenant un boîtier de soupape (14) avec
a. une ouverture de sortie de soupape (30) pour le raccordement d'une ligne d'extinction (6),
b. une ouverture d'entrée de soupape (16) pour le raccordement de la soupape (3) au récipient sous pression (2),
c. un siège de soupape (25) disposé entre l'ouverture de sortie de soupape (30) et l'ouverture d'entrée de soupape (16),
d. une chambre basse pression (24) pour le raccordement à un dispositif de déclenchement (5), et
e. une chambre haute pression (33) pouvant être reliée avec la chambre basse pression (24),
où l'on trouve disposés dans le boîtier de soupape (14)
f. un piston de fermeture (26), ayant une garniture de siège de soupape (27), qui peut être déplacé entre une position de fermeture de piston de fermeture et une position d'ouverture de piston de fermeture,
g. un piston de commande (52), pouvant être déplacé entre une position de fermeture de piston de commande et une position d'ouverture de piston de commande,
h. le piston de fermeture (26) étant disposé avec la garniture de siège de soupape (27) sur le siège de soupape (25) de manière étanche aux fluides de sorte que l'ouverture de sortie de soupape (30) est rendue étanche vis-à-vis de l'ouverture d'entrée de soupape (16),
i. le piston de fermeture (26) étant disposé espacé du siège de soupape (25) dans la position d'ouverture du piston de fermeture de sorte que l'ouverture de sortie de soupape (30) et l'ouverture d'entrée de soupape (16) sont en communication sous pression,
j. le piston de commande (52) rendant une conduite sous pression (42, 43) entre la chambre haute pression (33) et la chambre basse pression (24) étanche aux fluides dans la position de fermeture du piston de commande,
k. le piston de commande (52) libérant la conduite sous pression (42, 43) dans la position d'ouverture du piton de commande de sorte que la chambre haute pression (33) et la chambre basse pression (24) sont en liaison de pression,
**caractérisée en ce**
l. **qu**'une unité de réglage de la pression (21), étant en liaison de pression avec l'ouverture d'entrée de soupape (16) et la chambre basse pression (24) est disposée dans le boitier de soupape (14) pour la régulation d'une basse pression (p_{B}) dans la chambre basse pression (24) par rapport à une pression de récipient (p_{R}) du récipient sous pression (2), et
m. **qu**'un capteur de signaux (58) pour la détection de la position du piston de commande (52) dans le boîtier de soupape (14) est prévu pour le déclenchement d'un processus d'extinction.

2. Soupape selon la revendication 1, **caractérisée par** une soupape d'étranglement/d'arrêt (61), disposée entre la chambre basse pression (24) et une ouverture de déclenchement (62) pour le raccordement du dispositif de déclenchement (5), destinée à la régulation d'une liaison en pression entre la chambre basse pression (24) et le dispositif de déclenchement (5).

3. Soupape selon la revendication 2, **caractérisée en ce que** la soupape d'étranglement/d'arrêt (61) peut être disposée entre une position d'arrêt, une position d'étranglement et une position ouverte.

4. Soupape selon les revendications 2 ou 3, **caractérisée par** un capteur de signaux de levier oscillant (65) pour la détection d'une position de la soupape d'étranglement/d'arrêt (61).

5. Soupape selon l'une des revendications précédentes, **caractérisée par** un alésage pour un équilibrage de la pression (32) dans le piston de fermeture (26) pour une liaison en pression de l'ouverture d'entrée de soupape (16) avec la chambre haute pression (33).

6. Soupape selon l'une des revendications précédentes, **caractérisée par** l'unité de régulation de pression (21) de telle façon que la basse pression (p_{B}) dans la chambre basse pression (24) est réduite par rapport à la pression de récipient (p_{R}) dans le récipient sous pression (2).

7. Soupape selon l'une des revendications précédentes, **caractérisée par** un raccord (19) pour un élément de raccordement, notamment, un appareil de mesure de la pression (4).

8. Soupape selon l'une des revendications précédentes, **caractérisée en ce que** la conduite sous pression (42, 43) s'étend à travers un élément intermédiaire (38), la conduite sous pression (42, 43) pouvant être fermée de manière étanche aux fluides par le piston de commande (52).

9. Soupape selon la revendication 8, **caractérisée par** un ressort de piston de commande (60) de telle sorte qu'une force élastique agit sur le piston de commande (52) en direction de l'élément intermédiaire (38) pour l'ouverture de la conduite sous pression (42, 43).

10. Soupape selon l'une des revendications précédentes, **caractérisée par** un élément d'amortissement (35) pour l'amortissement d'un choc du piston de fermeture (26) déplacé du siège de soupape (25).

11. Soupape selon l'une des revendications précédentes, **caractérisée par** un ressort de piston de fermeture (41) de telle manière qu'une force élastique agit sur le piston de fermeture (26) en direction du siège de soupape (25).

12. Soupape selon les revendications 10 et 11, **caractérisée en ce que** le ressort de piston de fermeture (41) est disposé entre l'élément intermédiaire (38) et l'élément d'amortissement (35).
